# EUROPÄISCHE PATENTSCHRIFT

(11) **EP 1 303 706 B1**
(45) Veröffentlichungstag und Bekanntmachung des Hinweises auf die Patenterteilung: **07.06.2006**
(21) Anmeldenummer: 01960343.0
(22) Anmeldetag: 21.06.2001
(51) Int. Cl.: F16C 29/06

(54) **LINEARWÄLZLAGER**
LINEAR ANTIFRICTION BEARING
ROULEMENT LINEAIRE

(30) Priorität: 25.07.2000 DE 10036016
(43) Veröffentlichungstag der Anmeldung: 23.04.2003
(73) Patentinhaber: Schaeffler KG, 91074 Herzogenaurach (DE)
(72) Erfinder: FRIEDRICH, Horst, 66909 Herschweiler-Pettersheim (DE)
(86) Internationale Anmeldenummer: PCT/EP2001/007003
(87) Internationale Veröffentlichungsnummer: WO 2002/008621

(56) Entgegenhaltungen:
- FR-A- 2 522 749
- US-A- 4 647 226
- US-A- 4 778 284
- US-A- 4 806 022
- US-A- 5 575 565
- PATENT ABSTRACTS OF JAPAN vol. 014, no. 379 (M-1012), 16. August 1990 (1990-08-16) & JP 02 142918 A (NIPPON SEIKO KK), 1. Juni 1990 (1990-06-01)
- PATENT ABSTRACTS OF JAPAN vol. 2000, no. 14, 5. März 2001 (2001-03-05) & JP 2000 320638 A (TERAMACHI HIROSHI), 24. November 2000 (2000-11-24)

## Beschreibung

Die Erfindung betrifft ein Linearwälzlager mit einer im Querschnitt U-förmigen Führungsschiene, an deren Innenseite zur Schienenlängsrichtung parallele Laufbahnen angeordnet sich, und mit einem innerhalb der Führungsschiene über Wälzkörper an den Laufbahnen abgestützten, längsverschieblichen Laufwagen, wobei die Wälzkörper in mehreren endlosen Umläufen an einem Tragkörper des Laufwagens angeordnet sind und jeder Umlauf eine Reihe tragender Wälzkörper, eine Reihe rücklaufender Wälzkörper, sowie zwei diese Reihen miteinander verbindende Wälzkörperumlenkreihen aufweist, und wobei jeweils die Reihe der tragenden Wälzkörper an nach außen weisenden Laufbahnen des Laufwagens und die Reihe der rücklaufenden Wälzkörper in einem Rücklaufkanal des Tragkörpers angeordnet ist.

Linearführungen, welche als sogenannte Blechführungen ausgebildet sind, können sowohl bei der Führungsschiene als auch bei dem Laufwagen U-förmige Querschnitte aufweisen. diese sind häufig zwar kostengünstig herzustellen, jedoch nicht geeignet, hohe Lasten zu führen. Kugelumlaufführungen mit massiven Tragkörpern zeichnen sich zwar durch einen geringen Bauraum und eine hohe Belastbarkeit aus, sind jedoch nicht kostengünstig herzustellen, da in dem Tragkörper jeweils mehrere einzelne Bohrungen angeordnet werden müssen, durch welche die Wälzkörper zurückgeführt werden.

Ein Linearwälzlager mit einer U-förmigen Führungsschiene ist aus der Druckschrift DE 36 27 169 C2 bekannt. Bei diesem Lager sind jedoch keine Maßnahmen vorgesehen, um zu verhindem, dass die Wälzkörper aus dem Laufwagen herausfallen, wenn dieser aus der Führungsschiene herausgenommen wird.

Die Druckschrift US 4,799,806 zeigt ein Linearwälzlager, bei welchem die Wälzkörper in Rücklauf- und Umlenkkanälen aus Kunststoff geführt sind. Jeder Rücklaufkanal ist in Längsrichtung geteilt ausgeführt, wobei ein Teil in Aufnahmeöffnungen des Tragkörpers gehalten und daran angepasst sein muss. Daher ergibt sich hier eine komplizierte Konstruktion, für welche die Werkzeugkosten relativ hoch sind.

Die Druckschrift US 4,917,508 zeigt ein Lager, dessen Laufwagen aus Tragelementen mit Wälzkörperlaufbahnen und zwei Abdeckblechen besteht, welche die Wälzkörperhalterung übernehmen. Dabei sind die Tragelemente und die Abdeckbleche fest miteinander vernietet. Dadurch wird es erforderlich, die Tragplatten sehr exakt auszurichten, um sicherzustellen, dass alle Wälzkörper mit der gleichen Last belastet werden.

Ein Linearwälzlager der eingangs genannten Art ist aus der Druckschrift DE 19614 513 A1 bekannt. Bei diesem sind zwei Wälzkörperumläufe eines Laufwagens von zwei mit Laufrillen versehenen Tragelementen und einer gemeinsamen Leitplatte mit zwei durchgehenden inneren Ausnehmungen gebildet, in welchen die Tragelemente und die Wälzkörper eingesetzt sind, so dass sich auch hier eine aufwendige und daher teuere Konstruktion ergibt.

Aus US 4,806,022 ist ein Linearwälzlager bekannt geworden, mit einer im Querschnitt u-förmigen Führungsschiene, an deren Innenseite zur Schienenlängsrichtung parallele Laufbahnen angeordnet sind. Innerhalb der Führungsschiene ist ein Längsverschieblicher Laufwagen angeordnet, der über Wälzkörper an den Laufbahnen längsverschieblich abgestützt ist. Die Wälzkörper sind in mehreren endlosen Umläufen an einem Tragkörper des Laufwagens angeordnet und jeder Umlauf weist eine Reihe tragender Wälzkörper, einer Reihe rücklaufender Wälzkörper sowie zwei diese Reihen miteinander verbindende Wälzkörperumlenkreihen auf, wobei jeweils die Reihe der tragenden Wälzkörper an nach außen weisenden Laufbahnen des Laufwagens und die Reihe der rücklaufenden Wälzkörper in einen Rücklaufkanal des Tragkörpers angeordnet sind. Der Tragkörper weist einen zu den Laufbahnen parallelen Durchbruch auf und mehrere Rücklaufkanäle sind von einem in dem Durchbruch angeordneten Füllkörper gebildet, der für jeden Wälzkörperumlauf mit einer in Längsrichtung verlaufenden und umfangsseitig durchgehend geöffneten Ausnehmung versehen ist, in welcher die rücklaufenden Wälzkörper angeordnet sind.

### Zusammenfassung der Erfindung

Der Erfindung liegt die Aufgabe zu Grunde, eine Linearführung mit U-förmigem Schienenquerschnitt zu entwickeln, welche kostengünstig hergestellt werden kann und es ermöglicht, große Lasten auf kleinstem Bauraum zu führen.

Diese Aufgabe wird erfindungsgemäß dadurch gelöst, dass der der Durchbruch als kreiszylindrische Bohrung und der Füllkörper als in den Durchbruch des Tragkörpers passend eingesetztes Einsteckteil mit im Wesentlichen kreiszylindrischer Mantelfläche ausgeführt ist. An den beiden in die Verschieberichtungen weisenden Stirnseiten des Tragkörpers können Umlenkkörper zur Führung der Wälzkörperumlenkreihen angeordnet sein. Das Einsteckteil kann die gleiche Länge wie der Tragkörper aufweisen und mit diesem bündig abschließen. Es ist aber auch möglich, dass das Einsteckteil eine größere Länge als der Tragkörper aufweist und aus diesem beidseitig herausragt, wobei die Umlenkkörper angepasste Ausnehmungen zur Aufnahme der herausragenden Enden des Einsteckteils aufweisen. Das Einsteckteil kann auch eine kleinere Länge als der Tragkörper aufweisen und in diesem beidseitig zurückstehen, wobei die Umlenkkörper Fortsätze aufweisen können, welche in der Länge und der Form dem Einsteckteil angepasst sind. Mit den Umlenkkörpern kann das Einsteckteil thermisch (z. B. durch Ultraschallschweißen) verbunden sein. Die Umlenkkörper können an den Stirnseiten des Einsteckteils mittels Schraubverbindungen befestigt sein, wobei an den Stirnseiten des Einsteckteils Innen- oder Außengewinde vorgesehen sind. Die Umlenkkörper können jeweils entweder einstückig oder zweistückig ausgebildet sein.

Der Füllkörper kann auch als Bauteil ausgebildet sein, welches an dem Tragkörper innerhalb des Durchbruchs angespritzt ist. Daher können an dem Tragkörper gemeinsam mit dem Füllkörper auch Rückhaltestege für die Wälzkörper und Endstücke einstückig angespritzt sein. In diesem Fall wird z. B. der Tragkörper in ein Spritzgußwerkzeug eingelegt und anschließend wird in einem Arbeitsgang der Füllkörper mit den Rückhaltestegen und den, Endstücken einstückig angespritzt. Als letzter Montageschritt werden die Umlenkkörper auf die angespritzten Endstücke aufgesteckt und dort befestigt, z. B. nach einem Ultraschallverfahren verschweißt.

### Kurze Beschreibung der Zeichnung

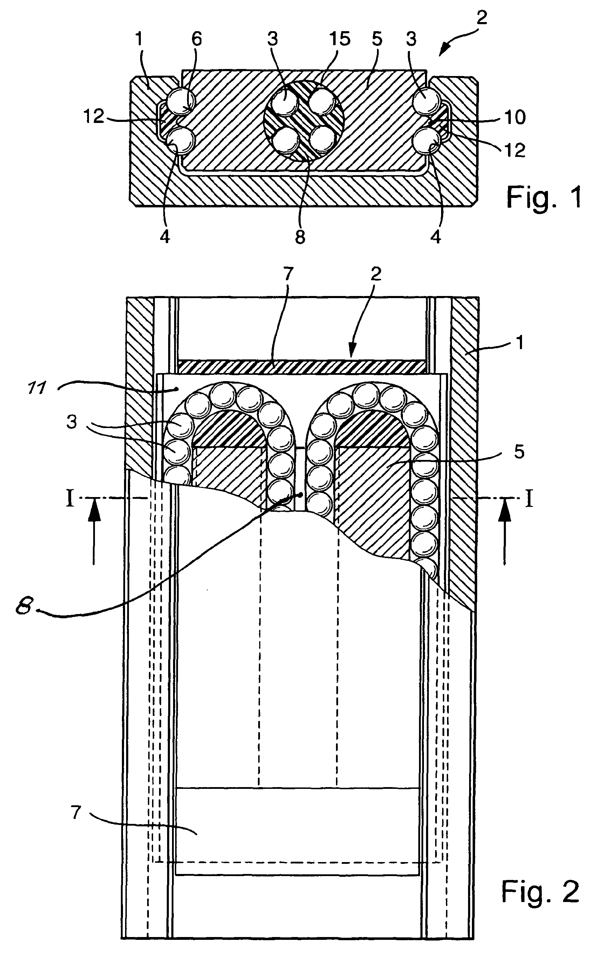

Ein Ausführungsbeispiel der Erfindung ist in der Zeichnung dargestellt und wird im Folgenden näher beschrieben. Es zeigen
- Figur 1: einen Querschnitt durch den Tragkörper des Laufwagens und die Führungsschiene eines erfindungsgemäßen Linearlagers mit vier Wälzkörperumläufen, gemäß Linie I-I der Figur 2;
- Figur 2: das von der Führungsschiene und dem Laufwagen gebildete Lager nach Figur 1 in einer Draufsicht mit teilweisem Längsschnitt;

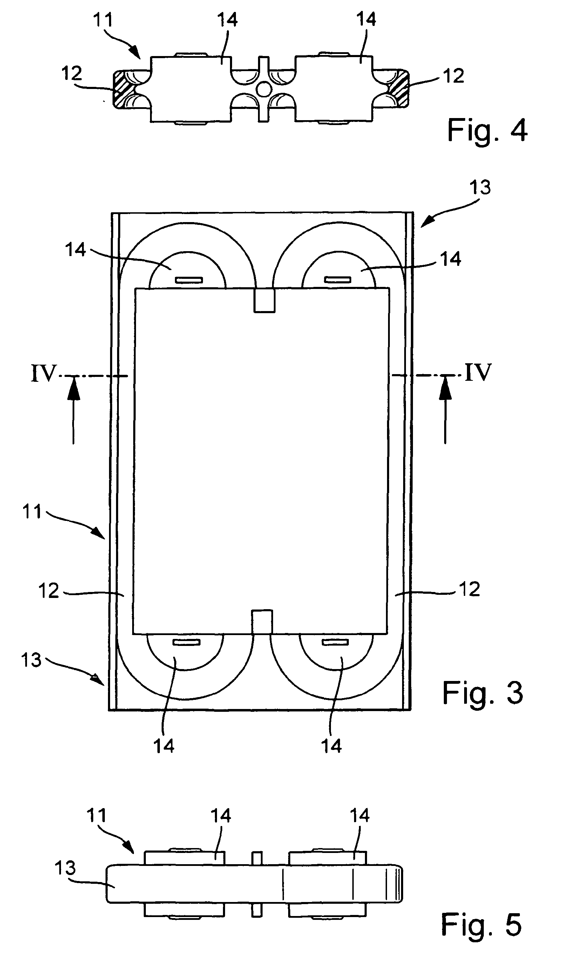

- Figur 3: ein Wälzkörperrückhalteelement für den Tragkörper des Lagers in einer Draufsicht;
- Figur 4: einen Querschnitt des Wälzkörperrückhalteelements gemäß Linie IV-IV der Figur 3;
- Figur 5: eine stirnseitige Ansicht des Wälzkörperrückhalteelements;

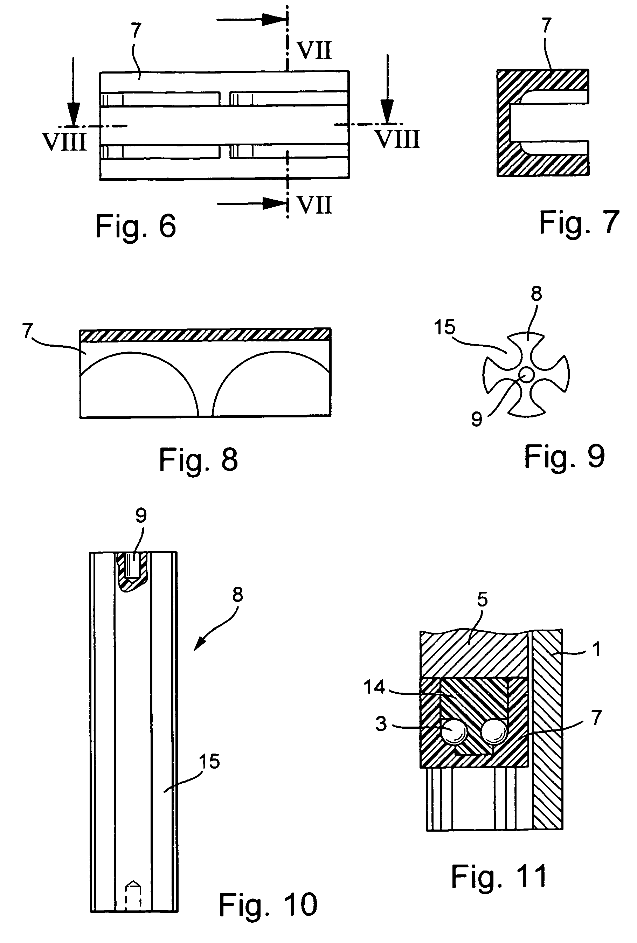

- Figur 6: eine Innenansicht eines Umlenkkörpers für den Laufwagen;
- Figur 7: einen Querschnitt des Umlenkkörpers gemäß Linie VII-VII der Figur 6;
- Figur 8: einen Längsschnitt des Umlenkkörpers gemäß Linie VIII-VIII der Figur 6;
- Figur 9: ein Einsteckteil für den Tragkörper in einer stimseitigen Ansicht;
- Figur 10: das Einsteckteil für den Tragkörper in einer Seitenansicht;
- Figur 11: einen Teillängsschnitt durch das Lager mit einem an dem Tragkörper anliegenden Umlenkstück.

### Ausführliche Beschreibung der Zeichnung

Ein erfindungsgemäßes Linearwälzlager weist eine im Querschnitt U-förmige Führungsschiene 1 auf, in welcher ein Laufwagen 2 längsverschieblich angeordnet ist. Dieser ist über als Kugeln ausgebildete Wälzkörper 3 an Laufbahnen 4 der Führungsschiene 1 abgestützt. Die Laufbahnen 4 sind an der Innenseite der Führungsschiene 1 an deren U-Schenkeln ausgebildet und erstrecken sich in Schienenlängsrichtung.

Der Laufwagen 2 enthält einen massiven Tragkörper 5 mit rechteckigem Querschnitt, an dessen Längsseiten nach außen weisende Laufbahnen 6 für die Wälzkörper 3 ausgebildet sind. Diese verlaufen parallel zu den Laufbahnen 4 der Schiene, denen sie gegenüberliegen. Zwischen den Laufbahnen 6 des Wagens und den Laufbahnen 4 der Schiene rollen die Wälzkörper 3 ab, wenn der Laufwagen 2 sich in der Führungsschiene 1 bewegt.

Damit der Laufwagen 2 an der Führungsschiene 1 unbegrenzte Wege fahren kann, sind die Wälzkörper 3 in mehreren endlosen Umläufen in dem Laufwagen 2 angeordnet. Um ein gleichmäßiges Ablaufen des Laufwagens 2 auf der Führungsschiene 1 und gleichzeitig möglichst hohe Tragzahlen zu erreichen, sind im Ausführungsbeispiel vier Kugelumläufe vorgesehen. Jeder Kugelumlauf besteht aus einer Reihe tragender Wälzkörper 3, die zwischen der jeweiligen Laufbahn 4 der Schiene und Laufbahn 6 des Wagens angeordnet ist, einer Reihe rücklaufender Wälzkörper 3, die innerhalb des Tragkörpers 5 angeordnet ist, sowie zwei diese Reihen miteinander verbindenden Wälzkörperumlenkreihen, die in zwei Umlenkkörpern 7 angeordnet sind. Jeder Umlenkkörper 7 ist an einer Stirnseite des Tragkörpers 5 anliegend befestigt.

Üblicherweise werden bei Umlauflagern die Wälzkörper nach dem Durchlaufen des Tragbereichs in Kunststoffendplatten umgelenkt und in einzelnen Bohrungen des Tragkörpers zurückgeführt, um wieder in den Tragbereich zu gelangen. Bei vier Kugelumläufen würden also vier Bohrungen des Tragkörpers für die Kugelrückführungen erforderlich sein. Da das Durchmesser-LängenVerhältnis einer solchen Bohrung ungünstig ist, würden die vier Bohrungen hohe Fertigungskosten verursachen.

Erfindungsgemäß wird die Rückführung der Wälzkörper 3 durch einen zu den Laufbahnen 4 und 6 parallelen Durchbruch des Tragkörpers 5 ermöglicht, der im Ausführungsbeispiel als zentrale Bohrung ausgeführt ist. Damit die Wälzkörper 3 mehrerer Rücklaufreihen in diesem Durchbruch voneinander getrennt bleiben, ist in diesem ein im Querschnitt sternförmiges Einsteckteil 8 eingesetzt. Dieses ist im Querschnitt im wesentlichen dem Querschnitt des Durchbruchs des Tragkörpers 5 angepasst. Es weist mehrere in Längsrichtung verlaufende durchgehende Ausnehmungen 15 auf, in welchen die rücklaufenden Wälzkörper 3 angeordnet sind.

Zur Befestigung der Umlenkkörper 7 an den Stirnseiten des Tragkörpers 5 können im Tragkörper Gewinde eingebracht werden, die zur Aufnahme von Schrauben dienen, mit welchen die Umlenkkörper angeschraubt werden. Kostengünstiger ist es jedoch, auf teuere Gewinde im Tragkörper 5 zu verzichten und statt dessen die Umlenkkörper 7 an dem Einsteckteil 8 stirnseitig zu befestigen. Beim Spritzgießen des Einsteckteils 8 kann in dessen Querschnittszentrum an den beiden Stirnseiten jeweils eine kleine Befestigungsbohrung 9 angeordnet werden, in welche eine den Umlenkkörper 7 an dem Einsteckteil 8 befestigende Schraube eingedreht wird.

Eine weitere Möglichkeit, die Umlenkkörper 7 an dem Einsteckteil 8 zu befestigen, besteht in deren Ultraschallverschweißung. Damit derartige Schraub- bzw. Schweißverbindungen nicht alle äußeren Kräfte aufzunehmen brauchen, welche durch Stöße oder Schläge auftreten können, kann das Einsteckteil 8 länger als der Tragkörper 5 sein. Die Umlenkkörper 7 können das Einsteckteil 8 formschlüssig umschließen, wodurch ein Verschieben dieser Teile gegeneinander verhindert wird. Der gleiche Effekt wird erreicht, wenn das Einsteckteil 8 kürzer als der Tragkörper 5 ist und die Umlenkkörper 7 in den zentralen Durchbruch des Tragkörpers 5 hineinragen.

Um zu verhindern, dass sich die Umlenkkörper 7 gegenüber dem Tragkörper 5 verdrehen, sind zwischen den benachbarten Laufbahnen 6 jeder Seite des Laufwagens 2 im Querschnitt V-förmige Nasen 10 ausgebildet. Diese können beim Schleifen der Laufbahnen 6 des Wagens mitgeschliffen werden und sind in Bezug auf Form und Lage sehr gut geeignet, die Umlenkkörper 7 an dem Tragkörper 5 zu positionieren und zu fixieren. Damit die Nasen 10 diese Funktion auch übernehmen können, müssen die Umlenkkörper 7 mit ihnen verbunden werden. Das geschieht durch Verwendung eines zusätzlichen Bauteils, welches als Wälzkörperrückhalteelement 11 wirkt und den Laufwagen 2 an vier Seiten umschließt. Die Längsseiten dieses Bauteils sind als Rückhaltestege 12 ausgeführt und im Innenbereich mit im Querschnitt V-förmigen Ausnehmungen versehen. Damit sind die Rückhaltestege 12 so gestaltet, dass sie sich formschlüssig auf die Nasen 10 des Tragkörpers 5 aufklipsen lassen.

Die beiden Rückhaltestege 12 des Wälzkörperrückhalteelements 11 übernehmen gleichzeitig auch die Wälzkörperrückhaltung, wenn der Laufwagen 2 noch nicht an der Führungsschiene 1 montiert ist. Sie sind durch angeformte Endstücke 13 miteinander verbunden. Diese liegen jeweils mit ihren Innenbereichen 14 am Tragkörper 5 an. Nach außen sind an den Innenbereichen 14 der Endstücke 13 Wälzkörperführungen angeformt, welche hier die Führung der Wälzkörper 3 übernehmen.

Nach der Montage des Einsteckteils 8 im Tragkörper 5 und dem Aufklipsen des Wälzkörperrückhalteelementes 11 werden die Umlenkkörper 7 formschlüssig auf die Endstücke 13 aufgesteckt und mit dem Einsteckteil 8 verschraubt. Damit ist ein sicherer Wälzkörperumlauf in dem Linearwälzlager gewährleistet.

### Bezugszahlen

- 1: Führungsschiene
- 2: Laufwagen
- 3: Wälzkörper
- 4: Laufbahn der Schiene
- 5: Tragkörper
- 6: Laufbahn des Wagens
- 7: Umlenkkörper
- 8: Einsteckteil
- 9: Befestigungsbohrung
- 10: Nase
- 11: Wälzkörperrückhalteelement
- 12: Rückhaltesteg
- 13: Endstück
- 14: Innenbereich
- 15: Ausnehmung

## Patentansprüche

1. Linearwälzlager mit einer im Querschnitt U-förmigen Führungsschiene (1), an deren Innenseite zur Schienenlängsrichtung parallele Laufbahnen (4) angeordnet sind, und mit einem innerhalb der Führungsschiene (1) über Wälzköper (3) an den Laufbahnen (4) abgestützten, längsverschieblichen Laufwagen (2), wobei die Wälzkörper (3) in mehreren endlosen Umläufen an einem Tragkörper (5) des Laufwagens (2) angeordnet sind und jeder Umlauf eine Reihe tragender Wälzkörper (3), eine Reihe rüddaufender Wälzkörper (3) sowie zwei diese Reihen miteinander verbindende Wälzkörperumlenkreihen aufweist, und wobei jeweils die Reihe der tragenden Wälzkörper (3) an nach außen weisenden Laufbahnen (6) des Laufwagens (2) und die Reihe der rücklaufenden Wälzkörper (3) in einem Rücklaufkanal des Tragkörpers (5) angeordnet ist, wobei der Tragkörper (5) einen zu den Laufbahnen (4, 6) parallelen Durchbruch aufweist und mehrere Rücklaufkanäle von einem in dem Durchbruch angeordneten Füllkörper gebildet sind, wobei der Füllkörper für jeden Wälzkörperumlauf mit einer in Längsrichtung verlaufenden und umfangsseitig durchgehend geöffneten Ausnehmung (15) versehen ist, in welcher die rücklaufenden Wälzkörper (3) angeordnet sind, **dadurch gekennzeichnet, dass** der Durchbruch als kreiszylindrische Bohrung und der Füllkörper als in den Durchbruch des Tragkörpers (5) passend eingesetztes Enstedcteil (8) mit im wesentlichen kreiszylindrischer Mantelfläche ausgeführt ist.

2. Wälzlager nach Anspruch 1, **dadurch gekennzeichnet, dass** an den beiden in die Verschieberichtungen weisenden Stirnseiten des Tragkörpers (5) Umlenkkörper (7) zur Führung der Wälzkörperumlenkreihen angeordnet sind.

3. Wälzlager nach Anspruch 1, **dadurch gekennzeichnet, dass** das Einsteckteil (8) die gleiche Länge wie der Tragkörper (5) aufweist und mit diesem bündig abschließt.

4. Wälzlager nach Anspruch 2, **dadurch gekennzeichnet, dass** das Einsteckteil (8) eine größere Länge als der Tragkörper (5) aufweist und aus diesem beidseitig herausragt, wobei die Umlenkkörper (7) angepasste Ausnehmungen zur Aufnahme der herausragenden Enden des Einsteckteils (8) aufweisen.

5. Wälzlager nach Anspruch 2, **dadurch gekennzeichnet, dass** das Einsteckteil (8) eine kleinere Länge als der Tragkörper (5) aufweist und in diesem beidseitig zurücksteht, wobei die Umlenkkörper (7) Fortsätze aufweisen, welche in der Länge und der Form dem Einsteckteil (8) angepasst sind.

6. Wälzlager nach Anspruch 2, **dadurch gekennzeichnet, dass** das Einsteckteil (8) mit den Umlenkkörpern (7) thermisch, z.B. durch Ultraschallschweißen, verbunden ist.

7. Wälzlager nach Anspruch 2, **dadurch gekennzeichnet, dass** die Umlenkkörper (7) an den Stirnseiten des Einsteckteils (8) mittels Schraubverbindungen befestigt sind, wobei an den Stirnseiten des Einsteckteils (8) Innen- oder Außengewinde vorgesehen sind.

8. Wälzlager nach Anspruch 2, **dadurch gekennzeichnet, dass** die Umlenkkörper (7) einstückig oder zweistückig ausgebildet sind.

9. Wälzlager nach Anspruch 1, **dadurch gekennzeichnet, dass** der Füllkörper als an dem Tragkörper (5) innerhalb des Durchbruchs angespritztes Bauteil ausgebildet ist.

10. Wälzlager nach Anspruch 9, **dadurch gekennzeichnet, dass** an dem Tragkörper (5) gemeinsam mit dem Füllkörper ein zusätzliches Bauteil bildendes Wälzkörperrückhalteelement (11) mit an den Längsseiten des Wälzkörperrückhalteelementes ausgeführten Rückhaltestegen (12) für die Wälzkörper (3) und Endstücke (13) einstückig angespritzt ist.

## Claims

1. Linear anti-friction bearing comprising a guide rail (1) which has a U-shaped cross section and on whose inner side raceways (4) parallel to the rail longitudinal direction are arranged, and comprising a running carriage (2) which can be displaced longitudinally and is supported by rolling elements (3) on the raceways (4) inside the guide rail (1), the rolling elements (3) being arranged in a plurality of endless tracks on a supporting body (5) of the running carriage (2), and each track having a row of supporting rolling elements (3), a row of returning rolling elements (3) and two rows of rolling element deflection means that connect these rows to one another, and in each case the row of supporting rolling elements (3) being arranged on raceways (4) facing outward on the running carriage (2), and the row of returning rolling elements (3) being arranged in a return channel of the supporting body (5), the supporting body (5) having an opening parallel to the raceways (4, 6), and a plurality of return channels being formed by a filling body which is arranged in the opening, the filling body being provided, for each rolling element track, with a recess (15) which is continuously open on the peripheral side and which runs in the longitudinal direction and in which the returning rolling elements (3) are arranged,
**characterized in that** the opening is designed as a circularly cylindrical bore and the filling body as an insert (8) inserted suitably into the opening in the supporting body (5) and having a substantially circularly cylindrical outer surface.

2. Anti-friction bearing according to Claim 1, **characterized in that** deflection bodies (7) for guiding the rows of rolling element deflection means are arranged at the two ends of the supporting body (5) pointing in the displacement directions.

3. Anti-friction bearing according to Claim 1, **characterized in that** the insert (8) has the same length as the supporting body (5) and ends flush with the latter.

4. Anti-friction bearing according to Claim 2, **characterized in that** the insert (8) has a greater length than the supporting body (5) and projects from the latter on both sides, the deflection bodies (7) having matched recesses to accommodate the projecting ends of the insert (8).

5. Anti-friction bearing according to Claim 2, **characterized in that** the insert (8) has a smaller length than the supporting body (5) and is set back on both sides in the latter, the deflection bodies (7) having extensions whose length and shape are matched to the insert (8).

6. Anti-friction bearing according to Claim 2, **characterized in that** the insert (8) is connected to the deflection bodies (7) thermally, for example by ultrasonic welding.

7. Anti-friction bearing according to Claim 2, **characterized in that** the deflection bodies (7) are fixed to the ends of the insert (8) by means of screw connections, internal or external threads being provided at the ends of the insert (8).

8. Anti-friction bearing according to Claim 2, **characterized in that** the deflection bodies (7) are formed in one piece or two pieces.

9. Anti-friction bearing according to Claim 1, **characterized in that** the filling body is formed as a component injection moulded on the supporting body (5) within the opening.

10. Anti-friction bearing according to Claim 9, **characterized in that** a rolling element retaining element (11) forming an additional component having retaining webs (12) formed at the longitudinal sides of the rolling element retaining element for the rolling elements (3) and end pieces (13) is injection moulded on the supporting body (5) in one piece, together with the filling body.

## Revendications

1. Palier linéaire avec un rail de guidage (1) à section transversale en forme de U, sur la face intérieure duquel sont disposés des chemins de roulement (4) parallèles à la direction longitudinale du rail, et avec un chariot (2) mobile longitudinalement, s'appuyant sur les chemins de roulement (4) par des corps de roulement (3) à l'intérieur du rail de guidage (1), dans lequel les corps de roulement (3) sont disposés en plusieurs parcours sans fin sur un corps de support (5) du chariot (2) et chaque parcours comprend une rangée de corps de roulement porteurs (3), une rangée de corps de roulement en sens inverse (3) ainsi que deux rangées de déviation de corps de roulement reliant ces rangées l'une à l'autre, et dans lequel à chaque fois la rangée des corps de roulement porteurs (3) est disposée sur des chemins de roulement (6) du chariot (2) tournés vers l'extérieur et la rangée des corps de roulement en sens inverse (3) est disposée dans un canal de retour du corps de support (5), dans lequel le corps de support (5) présente un passage parallèle aux chemins de roulement (4, 6) et plusieurs canaux de retour sont formés par un corps de remplissage disposé dans le passage, dans lequel le corps de remplissage est pourvu, pour chaque parcours de corps de roulement, d'un évidement (15) ouvert en continu côté parcours et orienté en direction longitudinale, dans lequel les corps de roulement en sens inverse (3) sont disposés, **caractérisé en ce que** le passage est réalisé par un alésage cylindrique circulaire et le corps de remplissage est constitué par une pièce rapportée (8), présentant une surface latérale essentiellement cylindrique circulaire, ajustée dans le passage du corps de support (5).

2. Palier linéaire selon la revendication 1, **caractérisé en ce que** des corps de déviation (7) pour le guidage des rangées de déviation de corps de roulement sont disposés sur les deux faces frontales du corps de support (5) orientées dans les directions de déplacement.

3. Palier linéaire selon la revendication 1, **caractérisé en ce que** la pièce rapportée (8) a la même longueur que le corps de support (5) et se termine à fleur de celui-ci.

4. Palier linéaire selon la revendication 2, **caractérisé en ce que** la pièce rapportée (8) a une plus grande longueur que le corps de support (5) et sort de celui-ci sur les deux côtés, dans lequel les corps de déviation (7) présentent des évidements adaptés destinés à recevoir les extrémités saillantes de la pièce rapportée (8).

5. Palier linéaire selon la revendication 2, **caractérisé en ce que** la pièce rapportée (8) a une plus petite longueur que le corps de support (5) et se termine en retrait dans celui-ci sur les deux côtés, dans lequel les corps de déviation (7) présentent des prolongements qui sont adaptés à la longueur et à la forme de la pièce rapportée (8).

6. Palier linéaire selon la revendication 2, **caractérisé en ce que** la pièce rapportée (8) est assemblée thermiquement, par exemple par soudage aux ultrasons, aux corps de déviation (7).

7. Palier linéaire selon la revendication 2, **caractérisé en ce que** les corps de déviation (7) sont fixés sur les faces frontales de la pièce rapportée (8) au moyen de vis d'assemblage, dans lequel il est prévu des filets intérieurs ou extérieurs dans les faces frontales de la pièce rapportée (8).

8. Palier linéaire selon la revendication 2, **caractérisé en ce que** les corps de déviation (7) sont formés en une pièce ou en deux pièces.

9. Palier linéaire selon la revendication 1, **caractérisé en ce que** le corps de remplissage est constitué par une pièce formée par projection sur le corps de support (5) à l'intérieur du passage.

10. Palier linéaire selon la revendication 9, **caractérisé en ce que**, sur le corps de support (5) en même temps que le corps de remplissage, est projeté un élément de retenue des corps de roulement formant une pièce supplémentaire (11), d'une seule pièce avec des nervures de retenue (12) formées sur les côtés longitudinaux de l'élément de retenue des corps de roulement pour les corps de roulement (3) et des pièces d'extrémité (13).
